(19) Europäisches Patentamt
European Patent Office
Office européen des brevets

(11) **EP 2 166 215 A1**

(12) **EUROPEAN PATENT APPLICATION**

(43) Date of publication:
**24.03.2010 Bulletin 2010/12**

(51) Int Cl.:
*F02D 41/00* (2006.01)  *F02D 41/40* (2006.01)
*F02D 41/08* (2006.01)

(21) Application number: **08164877.6**

(22) Date of filing: **23.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **Hyundai Motor Europe Technical Center GmbH**
**65428 Rüsselsheim (DE)**
• **Hyundai Motor Company**
**Seoul (KR)**
• **Kia Motors Corporation**
**Seoul (KR)**

(72) Inventors:
• **Ullrich, J.**
**65428, Ruesselsheim (DE)**

• **Steininger, R.**
**65428 Ruesselsheim (DE)**
• **Grimm, J.**
**65428 Ruesselsheim (DE)**
• **Lang, S.**
**65428 Ruesselsheim (DE)**
• **Kuric, J.**
**65428 Ruesselsheim (DE)**
• **Boschmann, V.**
**65428 Ruesselsheim (DE)**
• **Bollmann, D.**
**65428 Ruesselsheim (DE)**

(74) Representative: **Barth, Stephan Manuel**
**Reinhard, Skuhra, Weise & Partner GbR**
**Patent- und Rechtsanwälte**
**Friedrichstrasse 31**
**80801 München (DE)**

(54) **Method and device for dosing fuel which is to be injected into a combustion chamber of an internal combustion engine**

(57)    The present invention creates a method and a device for dosing fuel which is to be injected into a combustion chamber of an internal combustion engine, with a fuel quantity which is to be dosed for a combustion of a respective cylinder being divided into at least one pilot injection quantity (QP1; QP2) and a main injection quantity (QM), and with respective base and corrective values of activation times ($t_{on}$(P1); $t_{on}$(P2); $t_{on}$(PM)) of an injection device for the injection of the pilot injection quantity (QP1; QP2) and the main injection quantity (QM) being defined using the following steps: storing a reference total injection quantity (QT') for a predetermined operating state of the internal combustion engine; placing the internal combustion engine into the operating state and setting activation times, which correspond to the operating state, for the at least one pilot injection quantity (QP1; QP2) and the main injection quantity (QM); determining a present total injection quantity (QT) in the operating state on the basis of the set activation times which correspond to the operating state; determining a difference between the reference total injection quantity (QT') and the determined present total injection quantity (QT); and forming the respective corrective values of the activation times ($t_{on}$(P1); $t_{on}$(P2); $t_{on}$(PM)) taking into consideration the determined difference.

Fig. 1

**Description**

The present invention relates to a method and to a device for dosing fuel which is to be injected into a combustion chamber of an internal combustion engine, with a fuel quantity which is to be dosed for a combustion of a respective cylinder being divided into at least one pilot injection quantity and a main injection quantity, and with respective base and corrective values of activation times of an injection device for the injection of the pilot injection quantity and the main injection quantity being defined.

Although the present invention and the problem on which it is based are explained below on the basis of common-rail injection systems of passenger vehicle diesel engines, the invention is not restricted thereto, but rather can be applied generally to any desired internal combustion engine.

A common-rail injection system has a common high-pressure fuel accumulator with corresponding outlets for supplying the individual cylinders of an internal combustion engine with fuel. The supply to the cylinders is controlled by means of so-called injectors which are realized for example in the form of piezoelectrically or electromagnetically activatable valves. By well defined control of the piezoelectric, magnetic or otherwise designed actuator, and opening and a shutting of a so-called injection valve is effected, which has the consequence of a fuel injection, for example into a combustion chamber of a combustion engine. It is possible to realize different injections and injection sequences, for example a pilot injection, a main injection and a post-injection, and combinations thereof which may be freely programmed by means of modern control units. Pilot injections serve in particular for pre-conditioning of the combustion chamber with regard to temperature and oxygen proportion.

Normally, post-injections serve to oxidise the soot originating from the combustion or to enhance the exhaust gas temperature in connection with particle filters integrated into the exhaust gas flow.

Future emissions standards will require pilot-injection quantities which are less than 0.8 mg / injection stroke. For Modern-day fuel dosing concepts the value of 0.8 mg / injection stroke forms a critical lower limit which are problematically to be realized under the boundary conditions of a serial production for reasons of presently existing measurement technique and of the demand for rational, i.e. also time period optimized, manufacturing methods.

The injection quantities of the injectors are also subject to ageing effects which can lead both to an increase and also to an decrease in the injection quantity for a constant injection time of the injector and therefore to a deterioration of the emission and noise behaviour of the motor. There are no cost-effective, robust measuring systems for injection quantities which are less than 0.8 mg / injection stroke. Also the modern-day measuring methods are to slow and/or not accurate enough for such small injection quantities to be detected by these measurement techniques. Furthermore, sensors which allow conclusions about the global oxygen content in the exhaust gas and thus about the totally injected fuel a quantity by means of an analysis of the exhaust gas composition do not provide any information about the accurate timely and quantitavely resolved distribution of the individual fuel injections.

Furthermore, variances in the mechanical geometrical injector characteristic variables on account of production tolerances at adversely effect dosing accuracy. A reduction in production tolerances of said type will dramatically increase the costs for the injectors.

Said ageing drift of the injection quantity for a constant activation duration is nowadays compensated only by means of use of indirect information (for example rotation inhomogeneity of the crank or body sound originating from a combustion process) which does not always provide a sufficient or appropriate compensation, because these methods cannot distinguish between an actual ageing process of the injector and secondary effects of the drive chain or of the internal combustion engine.

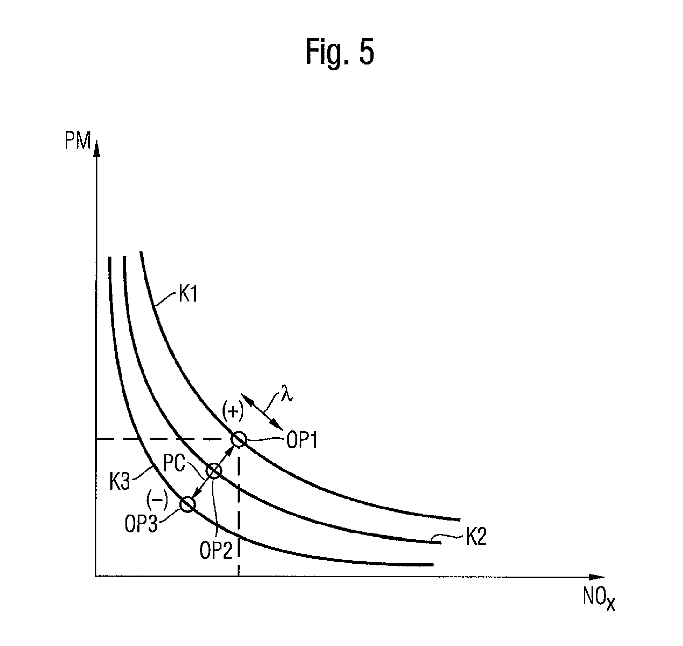

Figure 5 is an illustration of the dependency of particle emissions PM and $NO_x$ emissions for different pilot injection quantities and different λ values.

In figure 5, the $NO_x$ emissions are plotted on the x-axis and the particle emissions PM are plotted on the y-axis. The curve K2 shows an operating point OP2 for an optimum setting of a pilot injection quantity at a base value of for example 0.9 mg / injection stroke. Corresponding to the operating state of the internal combustion engine, the λ-EGR control (EGR = exhaust-gas recirculation) moves the operating point OP2 along the curve K2.

If the pilot injection quantity now changes, this leads to a shift to an operating point OP1 on the curve K1 in the case of an excessively large pilot injection quantity and to a shift to an operating point OP3 on the curve K3 in the case of an excessively small pilot injection quantity. In particular, a shift to an excessively large pilot injection quantity brings about an increase in emissions and particle output, which has to be considered as a deteriovation of the emission quality.

A shift to relatively low pilot injection quantities of less than 0.3 mg / injection stroke may even have the result that combustion, and therefore pre-conditioning of the combustion chamber, can no longer be carried out, whereby the noise emissions of the motor are deteriorated.

EP 1 712 768 A2 discloses a method and a device for controlling the fuel dosing in at least one combustion chamber of an internal combustion engine, with an activation variable which defines the injected fuel quantity being predefined on the basis of at least one characteristic operating variable. A corrective value for correcting the activation variable is predefined on the basis of a variable which characterizes the cylinder pressure.

WO 2007/006660 A1 describes a method for dosing fuel in a combustion chamber of an internal combustion engine, in which method a fuel quantity which is to be dosed for a combustion is dosed by means of a pilot injection and at least one further partial injection, and in which method, during operation of the internal combustion engine, quantity errors in the pilot injection are determined from the signal of a bodyshell sensor. A corrective value is formed as a function of the quantity error of the pilot injection, and at least one of the further partial injections is corrected using the corrective value. Said method permits the derivation of control parameters for the pilot injection quantity of the order of magnitude of 1 mg / injection stroke. If no combustion whatsoever occurs at excessively small pilot injection quantities, said method is equally blind, and thus cannot define a corrective value.

It is an object of the present invention to provide a method and a device for dosing fuel which is to be injected into a combustion chamber of an internal combustion engine, which permit a very precise definition of the one or more injection quantities, particularly pilot, post and main injection, on a very low injection quantity level (particularly values <1,0 mg / injection stroke) such that no additional hardware going beyond the equipment of combustion engines according to the state of the art is not required.

The method according to the invention having the features of Claim 1, and the corresponding device according to Claim 11, have the advantage that they permit precise correction of the one or more pilot injection quantities and of the main injection quantity with very short cycle times of typically a few minutes.

The concept on which the present invention is based is that of defining and storing a reference total injection quantity (physically measureable true injection quantitiy) for a predetermined operating state of the internal combustion engine, for example the idle state. The reference total injection quantity may be defined on the basis of experiments with a relatively high degree of accuracy, for example with a deviation of at most 10%.

While the internal combustion engine is in the predetermined operating state, a present or actual total injection quantity used in a motor controller for regulation pruposes is determined on the basis of the stored activation times which correspond to the operating state. A difference between the reference total injection quantity and the determined present total injection quantity is formed, and corrective values of the activation times of the injectors are defined on the basis of said difference.

On account of the fact that the relative division of the partial injection quantities is known from the definition (application) and is precisely defined by the relative division of the activation times, it is possible to derive corrective values for the activation times which have lowest tolerances. For example, at a reference total injection quantity of 3.5 mg / injection stroke, which is defined in advance with 10 % accuracy, in the case of two pilot injections and one main injection, corrective values for the injections are determined which are afflicted only with an error of approximately 0.12 mg / injection stroke. This control quality cannot be achieved by presently available technologies.

The subclaims relate to advantageous refinements of and improvements to the relevant subject matter of the invention.

According to one preferred refinement, the difference is divided by the number of different injection quantities and each activation time is corrected by a corresponding fraction.

According to a further preferred refinement, a fuel quantity which is to be dosed for a combustion of a respective cylinder is divided into a first and a second pilot injection quantity and a single main injection quantity.

According to a further preferred refinement, the operating state is an idle operating state or an arbitrary other state, wherein the reference total injection quality is well known and well defined.

According to a further preferred refinement, the activation times for the one or more pilot injection quantities are constant in the operating state, with the main injection quantity being regulated by an idle regulator or other state regulator corresponding to a predefined nominal speed.

According to a further preferred refinement, the difference is determined on the basis of an activation time difference between an activation time for the injection of the main injection quantity of the internal combustion engine corresponding to the reference total injection quantity and a determined present activation time for the injection of the main injection quantity in the predetermined operating state.

According to a further preferred refinement, the at least one pilot injection quantity is of the order of magnitude of 0.3 to 0.8 mg / injection stroke.

According to a further preferred refinement, a further correction of the activation times is carried out taking into consideration cylinder-specific corrective values.

According to a further preferred refinement, the injection device is a common-rail injection device, with the respective corrective values of activation times of the injection device for the injection of the pilot injection quantity and of the main injection quantity being defined at different operating pressures of the common-rail injection device.

According to a further preferred refinement, the reference total injection quantity has been determined with an accuracy of +/- 5%.

Exemplary embodiments of the invention are illustrated in the drawings and are explained in more detail in the following description. In the drawings:

Figure 1    shows a block diagram of a device, according to a first embodiment of the present invention, for dosing fuel which is to be injected into a combustion chamber of an internal combustion engine;

Figure 2    shows a flow diagram for explaining the operation of the device, according to the first embodiment of the present invention, for dosing fuel which is to be injected into a combustion chamber of an internal combustion engine;

Figure 3    shows a time-based diagram for explaining a method, according to a second embodiment of the present invention, for dosing fuel which is to be injected into a combustion chamber of an internal combustion engine;

Figure 4    shows an illustration of the dependency of an injection quantity Q on the activation time $t_{on}$ of an injector, used in the determination of corrective values of activation times in the second embodiment of the present invention; and

Figure 5    shows an illustration of the dependency of particle emissions PM and $NO_x$ emissions for different pilot injection quantities and different $\lambda$ values.

In the figures, identical reference symbols denote identical or functionally equivalent components.

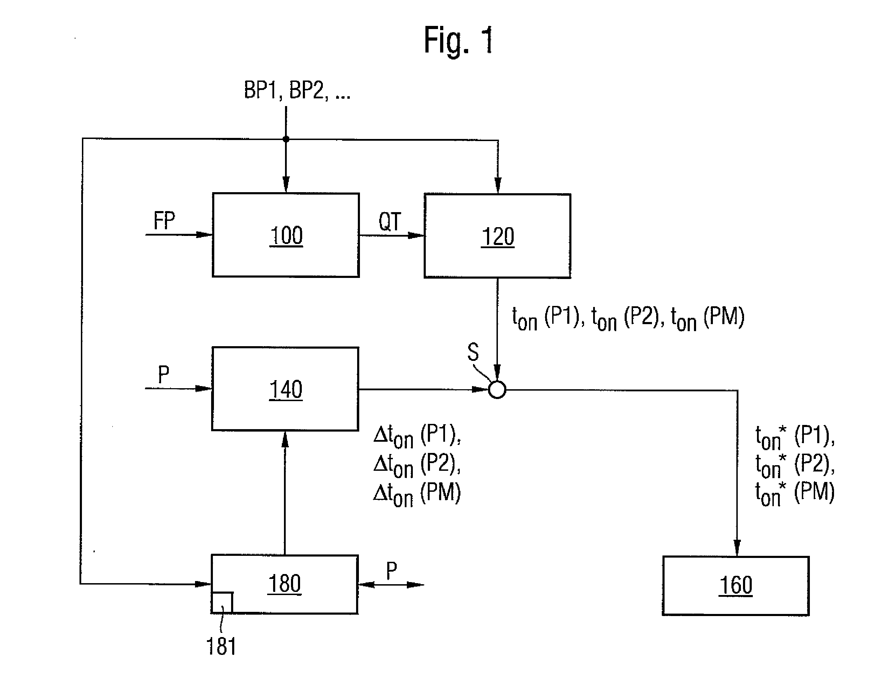

Figure 1 shows a block diagram of a device, according to a first embodiment of the present invention, for dosing fuel which is to be injected into a combustion chamber of an internal combustion engine.

In Figure 1, the reference symbol 100 denotes a fuel quantity determining device which, on the basis of a signal FP which represents a throttle pedal position, and on the basis of operating parameters BP1, BP2,..., determines a fuel quantity QT which is to be injected.

A signal corresponding to the fuel quantity QT to be injected is output together with the operating parameters BP1, BP2 to an activation duration determining device 120. The activation duration determining device 120 outputs activation times $t_{on}(P1)$, $t_{on}(P2)$ and $t_{on}(PM)$ which correspond to two pilot injections P1, P2 and a main injection PM.

A correction device 140 outputs activation duration corrective values $\Delta t_{on}(P1)$, $\Delta t_{on}(P2)$ and $\Delta t_{on}(PM)$ as a function of a present pressure P of the common-rail injector device, which activation duration corrective values $\Delta t_{on}(P1)$, $\Delta t_{on}(P2)$ and $t_{on}(PM)$ are added, in an adding unit S, to the activation durations $t_{on}(P1)$, $t_{on}(P2)$ and $t_{on}(PM)$. The activation duration corrective values of $\Delta t_{on}(P1)$, $\Delta t_{on}(P2)$, $\Delta t_{on}(PM)$ may have either a negative or a positive sign and reflect the ageing process of the injector (not shown). The adding unit S therefore supplies corrected activation durations

$$t_{on}{}^{*}(P1) = t_{on}(P1) + \Delta t_{on}(P1)$$

$$t_{on}{}^{*}(P2) = t_{on}(P2) + \Delta t_{on}(P2)$$

$$t_{on}{}^{*}(PM) = t_{on}(PM) + \Delta t_{on}(PM)$$

to an activation device 160 for the injector (not shown).

The reference symbol 180 in Figure 1 denotes a defining device for the cyclic or callable definition of the corrective values $\Delta t_{on}(P1)$, $\Delta t_{on}(P2)$ and $\Delta t_{on}(PM)$ in a predetermined operating state of the associated internal combustion engine. For this purpose, the defining device 180 comprises a memory device 181 in which is stored a reference total injection quantity QT' for the certain predetermined operating state of the internal combustion engine.

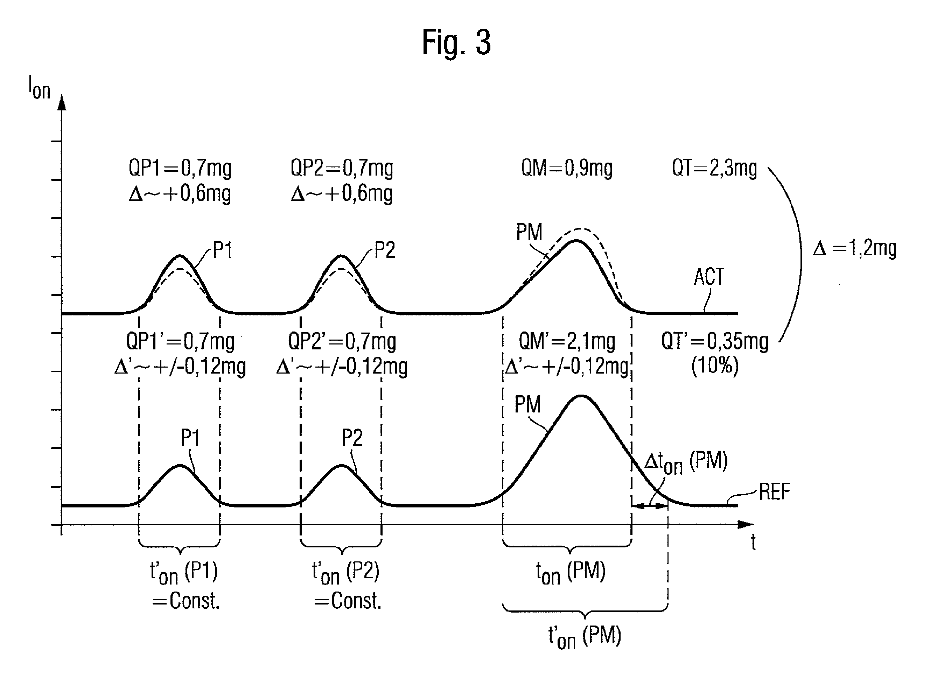

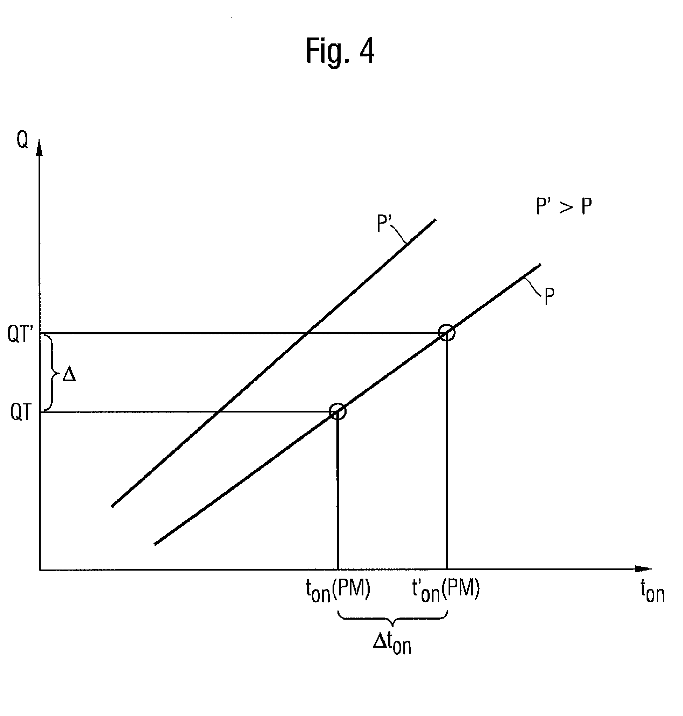

If the defining device 180 determines, on the basis of the operating parameters BP1, BP2,... which are supplied to it, that the internal combustion engine has been placed into the predetermined operating state, then said defining device 180 triggers the definition of the corrective values $\Delta t_{on}(P1)$, $\Delta t_{on}(P2)$, $\Delta t_{on}(PM)$. For this purpose, said defining device 180 determines a difference between the stored difference total injection quantity QT' and a presently determined total injection quantity QT. The present total injection quantity QT may be determined for example on the basis of control unit data of an engine control unit (not illustrated). On the basis of said difference, it is then possible to calculate the corrective values $\Delta t_{on}(P1)$, $\Delta t_{on}(P2)$, $\Delta t_{on}(PM)$ at a respective present pressure P of the common-rail injector device, as will be explained in more detail below in connection with Figures 3 and 4. Within the context of such a definition, the defining device 180 may demand a series of relevant pressures P of the common-rail injector device, and carry out a separate definition at each individual pressure P.

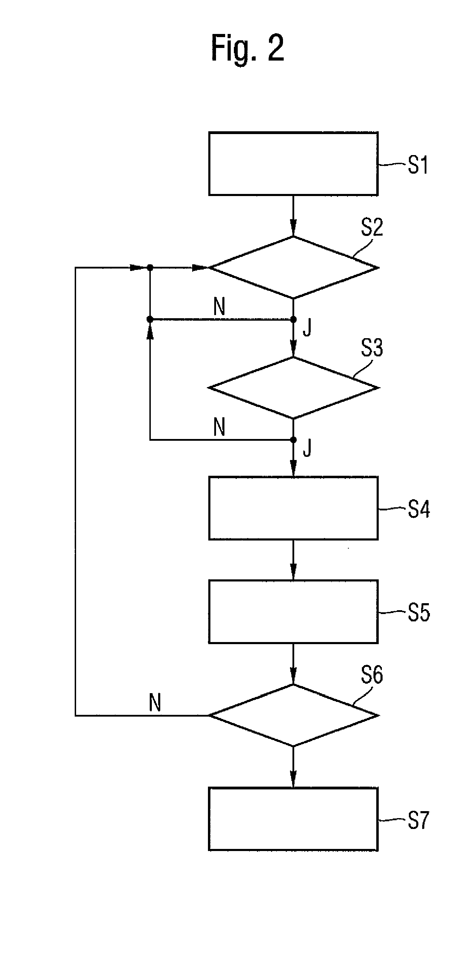

Figure 2 shows a flow diagram for explaining the operation of the device for dosing fuel which is to be injected into a combustion chamber of an internal combustion engine, according to the first embodiment of the present invention.

In Figure 2, the definition procedure for the corrective values of the activation times $\Delta t_{on}(P1)$, $\Delta t_{on}(P2)$, $\Delta t_{on}(PM)$ begins at step S1.

In step S2, it is checked whether the predetermined operating state, for example an idle state at 800 rpm at an operating temperature of 90°C and electrical auxiliary loads switched off, is present. If this is not the case, the programme remains at step S2 until the predetermined operating state is reached.

It should be noted that it is also possible at this point to enforce the predetermined operating state by means of suitable measures or signals to the driver or to the motor controller if said predetermined operating state has not occurred for a long time and if a new definition is required. However, the predetermined operating state may be selected such that it occurs relatively frequently, for example as often as the above-mentioned idle state.

In step S3, it is checked whether the predetermined operating state of the internal combustion engine is stable. If this is not the case, the programme reverts to step S2; the programme otherwise advances to step S4. In step S4, the corrective values $\Delta t_{on}(P1)$, $\Delta t_{on}(P2)$, $\Delta t_{on}(PM)$ are defined for different pressures of the common-rail injection device of the internal combustion engine. Such pressures are for example 230 bar, 500 bar, 800 bar, 1100 bar, 1400 bar, 1700 bar.

After the corrective values $\Delta t_{on}(P1)$, $\Delta t_{on}(P2)$, $\Delta t_{on}(PM)$ have been defined for all the pressures P, the programme advances to step S5, in which the corrective values $\Delta t_{on}(P1)$, $\Delta t_{on}(P2)$, $\Delta t_{on}(PM)$ are stored in the correction device 140 in the form of a characteristic value map as a function of the respective pressure. The correction device 140 can therefore, with the aid of the pressure signal P which is supplied to it, supply the corrective values $\Delta t_{on}(P1)$, $\Delta t_{on}(P2)$, $\Delta t_{on}(PM)$ corresponding to the respective pressure to the adding unit S during operation.

In step S6, it is subsequently checked whether a predetermined stop criterion is present, for example a deactivation of the internal combustion engine. If this is not the case, the programme reverts to step S2. The programme otherwise ends at step S7.

An example for the definition of the corrective values $\Delta t_{on}(P1)$, $\Delta t_{on}(P2)$, $\Delta t_{on}(PM)$ of the activation times $t_{on}(P1)$, $t_{on}(P2)$, $t_{on}(PM)$ is explained below with reference to Figures 3 and 4.

Figure 3 shows a time-based diagram for explaining a method, according to a second embodiment of the present invention, for dosing fuel which is to be injected into a combustion chamber of an internal combustion engine.

In Figure 3, the time t is plotted on the x-axis and the injection profile $I_{on}$ of the exemplary common-rail injection device of the internal combustion engine is plotted on the y-axis. The curve REF denotes a reference injection profile, whereas the curve ACT denotes a present injection profile. The present injection profile ACT and the reference injection profile REF provide two pilot injections P1, P2 and a main injection PM. The internal combustion engine is situated in the idle state at 800 rpm, at an operating temperature of 90°C and with auxiliary loads switched off.

From experiments, it is known that a reference total injection quantity QT' in this operating state is f. e. 3.5 mg per injection stroke. The reference total injection quantity QT' can be determined in this operating state with an accuracy of 10%, which corresponds to an error $\Delta'$ of approximately +/- 0.3 to 3.5 mg / injection stroke. The reference total injection quantity QT' is distributed between a first pilot injection quantity QP1' = 0.7 mg / injection stroke, a second pilot injection quantity QP2' = 0.7 mg / injection stoke and a main injection quantity QM' = 2.1 mg / injection stroke. The respective errors or deviations are distributed, in each case with $\Delta'$ approximately equal to +/- 0.12 mg, between the two pilot injections P1 and P2 and the main injection PM.

Reference is now made to the present injection profile ACT. The activation times $t_{on}'(P1)$, $t_{on}'(P2)$ for the two pilot injections P1, P2 are selected to be constant, that is to say to be equal for the curves ACT and REF. In contrast, the idle regulator (not illustrated) regulates the activation time $t_{on}'(PM)$ of the main injection PM in such a way that a predefined nominal idle speed is attained, for example 800 rpm, as stated above. If the pilot injections P1, P2 are afflicted with faults, for example on account of instances of ageing, that is to say said pilot injections do not correspond to their predefined reference injection quantities of 0.7 mg / injection stroke, this has the result that the regulator varies the activation time of the main injection PM in relation to the reference value $t_{on}'(PM)$. In the present case, a deviation $\Delta t_{on}(PM)$ results in a smaller activation time $t_{on}'(PM)$ during present operation. This means that, during the pilot injections P1, P2, the desired 0.7 mg injection quantity per injection stroke is not injected, but rather a larger value on account of the ageing of the injector (see dashed lines).

Figure 4 illustrates the dependency of an injection quantity Q on the activation time $t_{on}$ of an injector, used in the determination of corrective values of activation times in the second embodiment of the present invention.

In Figure 4, for the exemplary injector, the present injection quantity Q is illustrated as a function of the present activation time $t_{on}$, specifically for different pressures P, P', where P' > P. If it is assumed that the pressure P prevails in the present injection profile ACT, then it can be determined from the present activation duration $t_{on}(PM)$ of the main injection PM that the present total injection quantity is QT, whereas the reference total injection quantity is QT'.

From the dependency according to Figure 4, it is therefore possible to determine a difference $\Delta$ between the reference total injection quantity QT' and the present total injection quantity QT, specifically corresponding to the difference

of $\Delta t_{on}(PM)$ of the activation time of the main injection PM.

Said difference $\Delta$ is, in the present case, $\Delta$ = 1.2 mg / injection stroke, and may be attributed causally in equal measure to the errors in the pilot injections P1, P2; in other words, the injection quantities QP1, QP2 of the pilot injections P1, P2 are in each case 0.6 mg / injection stroke too high. Accordingly, all the activation durations must be corrected such that the respective injection quantity QP1, QP2, QPM is lower by $\Delta$/3 = 0.4 mg / injection stroke. The corresponding changes to the activation times of the injector $\Delta t_{on}(\Delta/3)$ can likewise be gathered from Figure 4. The corrected activation times of the pilot injections P1, P2 and of the main injection PM are therefore given by:

$$t_{on}*(P1) = t_{on}(P1) - \Delta t_{on}(\Delta/3)$$

$$t_{on}*(P2) = t_{on}(P2) - \Delta t_{on}(\Delta/3)$$

$$t_{on}*(PM) = t_{on}(PM) + \Delta t_{on}(\Delta/3)$$

It is then possible to determine, on the basis of subsequent injection strokes, whether the injection time of the main injection PM again corresponds to the reference value $t'_{on}(PM)$. If this is the case, then the definition of the corrective values for the corresponding pressure P is ended, and may be resumed for further pressures P of the common-rail injection device. If this is not the case, then it is possible if appropriate for a further iteration to be carried out for the present pressure P.

Even though the present invention has been described above on the basis of preferred exemplary embodiments, the invention is not restricted thereto, but rather may be modified in numerous ways.

In particular, the invention may be used for any desired number of pilot, main, and post injections. The present total injection quantity may also be determined in some other way instead of by means of the activation time difference in the main injection, for example by means of a measurement.

It is also possible for further corrective data to be added to the defined corrective data, such as for example cylinder equalization data or injector equalization data, which reflect variance of the cylinders or of the injectors.

**Claims**

1. Method for dosing fuel which is to be injected into a combustion chamber of an internal combustion engine, with a fuel quantity which is to be dosed for a combustion of a respective cylinder being divided into at least one pilot injection quantity (QP1; QP2) and a main injection quantity (QM), and with respective base and corrective values of activation times ($t_{on}(P1)$; $t_{on}(P2)$; $t_{on}(PM)$) of an injection device for the injection of the pilot injection quantity (QP1; QP2) and the main injection quantity (QM) being defined by the following steps:

storing a determined reference total injection quantity (QT') for a predetermined operating state of the internal combustion engine;
placing the internal combustion engine into the operating state and setting activation times, which correspond to the operating state, for the at least one pilot injection quantity (QP1; QP2) and the main injection quantity (QM);
determining a present total injection quantity (QT) in the operating state on the basis of the set activation times which correspond to the operating state;
determining a difference ($\Delta$) between the reference total injection quantity (QT') and the determined present total injection quantity (QT); and
defining the respective corrective values of the activation times ($t_{on}(P1)$; $t_{on}(P2)$; $t_{on}(PM)$) taking into consideration the determined difference ($\Delta$).

2. Method according to Claim 1, with the difference ($\Delta$) being divided by the number of different injection quantities (QP1; QP2; QM), and each activation time ($t_{on}(P1)$; $t_{on}(P2)$; $t_{on}(PM)$) being corrected by a corresponding fraction.

3. Method according to Claim 1 or 2, with a fuel quantity which is to be dosed for a combustion of a respective cylinder being divided into a first and a second pilot injection quantity (QP1; QP2) and a single main injection quantity (QM).

4. Method according to one of the preceding claims, with the operating state being an idle operating state or an arbitrary other state, wherein the reference total injection quantity (QT') is well known and well defined.

5. Method according to Claim 4, with the activation times for the one or more pilot injection quantities (QP1; QP2) being constant in the operating state, and with the main injection quantity (QM) being regulated by an idle regulator or another regulator corresponding to a predefined nominal speed.

6. Method according to Claim 5, with the difference ($\Delta$) being determined on the basis of an activation time difference ($\Delta t_{on}$) between an activation time ($t_{on}$'(PM)) for the injection of the main injection quantity (QM) of the internal combustion engine corresponding to the reference total injection quantity (QT') and a determined present activation time ($t_{on}$'(PM)) for the injection of the main injection quantity (QM) in the predetermined operating state.

7. Method according to one of the preceding claims, with the at least one pilot injection quantity (QP1; QP2) being of the order of magnitude of 0.3 to 0.8 mg / injection stroke.

8. Method according to one of the preceding claims, with a further correction of the activation times ($t_{on}$(P1); $t_{on}$(P2); $t_{on}$(PM)) being carried out taking into consideration cylinder-specific corrective values.

9. Method according to one of the preceding claims, with the injection device being a common-rail injection device and the respective corrective values of activation times ($t_{on}$(P1); $t_{on}$(P2); $t_{on}$(PM)) of the injection device for the injection of the pilot injection quantity (QP1; QP2) and of the main injection quantity (QM) being defined at different operating pressures of the common-rail injection device.

10. Method according to one of the preceding claims, with the reference total injection quantity (QT') having been determined with an accuracy of +/- 5%.

11. Device for dosing fuel which is to be injected into a combustion chamber of the internal combustion engine, with a fuel quantity which is to be dosed for a combustion of a respective cylinder being divided into at least one pilot injection quantity (QP1; QP2) and a main injection quantity (QM), and with it being possible for respective corrective values of activation times ($t_{on}$(P1); $t_{on}$(P2); $t_{on}$(PM)) of an injection device for the injection of the pilot injection quantity (QP1; QP2) and of the main injection quantity (QM) to be defined, comprising:

   a memory device (181) for storing a reference total injection quantity (QT') for a predetermined operating state of the internal combustion engine;
   a conditioning device (180) for detecting the placement of the internal combustion engine into the operating state and for setting activation times, which correspond to the operating state, for the at least one pilot injection quantity (QP1; QP2) and the main injection quantity (QM); and
   a defining device (180) for determining a present total injection quantity (QT) in the operating state on the basis of the set activation times, which correspond to the operating state, and for determining a difference ($\Delta$) between the reference total injection quantity (QT') and the determined present total injection quantity (QT) and for defining the respective corrective values of the activation times ($t_{on}$(P1); $t_{on}$(P2); $t_{on}$(PM)) taking into consideration the determined difference ($\Delta$).

12. Device according to Claim 11, with the defining device (180) being designed so as to divide the difference ($\Delta$) by the number of different injection quantities (QP1; QP2; QM) and correcting each activation time ($t_{on}$(P1); $t_{on}$(P2); $t_{on}$(PM)) by a corresponding fraction.

13. Device according to Claim 11 or 12, with a fuel quantity which is to be dosed for a combustion of a respective cylinder being divided into a first and a second pilot injection quantity (QP1; QP2) and a single main injection quantity (QM).

14. Device according to one of the preceding Claims 11 to 13, with the operating state being an idle operating state.

15. Device according to Claim 14, with the activation times for the one or more pilot injection quantities (QP1; QP2) being constant in the operating state, and with the main injection quantity (QM) being regulated by an idle regulator corresponding to a predefined idle nominal speed.

16. Device according to Claim 15, with the defining device (180) being designed such that the difference ($\Delta$) is determined on the basis of an activation time difference ($\Delta t_{on}$) between an activation time ($t_{on}$'(PM)) for the injection of the main injection quantity (QM) of the internal combustion engine corresponding to the reference total injection quantity (QT')
and a determined present activation time ($t_{on}$'(PM)) for the injection of the main injection quantity (QM) in the
predetermined operating state.

17. Device according to one of the preceding Claims 11 to 16, with the at least one pilot injection quantity (QP1; QP2)
being of the order of magnitude of 0.3 to 0.8 mg / injection stroke.

18. Device according to one of the preceding Claims 11 to 17, with the defining device (180) being designed such that
a further correction of the activation times ($t_{on}$(P1); $t_{on}$(P2); $t_{on}$(PM)) is carried out taking into consideration cylinder-
specific corrective values.

19. Device according to one of the preceding Claims 11 to 18, with the injection device being a common-rail injection
device and with the defining device (180) being designed such that the respective corrective values of activation
times ($t_{on}$(P1); $t_{on}$(P2); $t_{on}$(PM)) of the injection device for the injection of the pilot injection quantity (QP1; QP2) and
of the main injection quantity (QM) are defined at different operating pressures of the common-rail injection device.

20. Device according to one of the preceding Claims 11 to 19, with the reference total injection quantity (QT') having
been determined with an accuracy of +/- 5%.

## Fig. 1

BP1, BP2, ...

FP → [ **100** ] — QT → [ **120** ]

$t_{on}$ (P1), $t_{on}$ (P2), $t_{on}$ (PM)

S

P → [ **140** ]

$\Delta t_{on}$ (P1), $\Delta t_{on}$ (P2), $\Delta t_{on}$ (PM)

$t_{on}^*$ (P1), $t_{on}^*$ (P2), $t_{on}^*$ (PM)

[ **180** ] ←→ P

181

[ **160** ]

# Fig. 2

# Fig. 3

EP 2 166 215 A1

# Fig. 4

# Fig. 5

Europäisches
Patentamt

European
Patent Office

Office européen
des brevets

# EUROPEAN SEARCH REPORT

**Application Number**

EP 08 16 4877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 035 315 A (MAZDA MOTOR [JP]) 13 September 2000 (2000-09-13) * the whole document * | 1-20 | INV. F02D41/00 F02D41/40 F02D41/08 |
| X | EP 0 947 686 A (ISUZU MOTORS LTD) 6 October 1999 (1999-10-06) * column 1, line 3 - column 6, line 30 * | 1 | |
| A | PATENT ABSTRACTS OF JAPAN vol. 2000, no. 23, 10 February 2001 (2001-02-10) & JP 2001 152948 A (TOYOTA MOTOR CORP), 5 June 2001 (2001-06-05) * abstract * | 1-20 | |
| A | PATENT ABSTRACTS OF JAPAN vol. 014, no. 164 (M-0957), 30 March 1990 (1990-03-30) & JP 02 023252 A (NIPPON DENSO CO LTD), 25 January 1990 (1990-01-25) * abstract * | 1-20 | TECHNICAL FIELDS SEARCHED (IPC) F02D |

The present search report has been drawn up for all claims

| Place of search | Date of completion of the search | Examiner |
|---|---|---|
| Munich | 17 October 2008 | Calabrese, Nunziante |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.** EP 08 16 4877

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2008

| Patent document cited in search report | | Publication date | Patent family member(s) | | Publication date |
|---|---|---|---|---|---|
| EP 1035315 | A | 13-09-2000 | DE | 60029657 T2 | 19-07-2007 |
| | | | JP | 2000320386 A | 21-11-2000 |
| EP 0947686 | A | 06-10-1999 | DE | 69918589 D1 | 19-08-2004 |
| | | | DE | 69918589 T2 | 21-07-2005 |
| | | | JP | 3855447 B2 | 13-12-2006 |
| | | | JP | 11287149 A | 19-10-1999 |
| | | | US | 6053150 A | 25-04-2000 |
| JP 2001152948 | A | 05-06-2001 | NONE | | |
| JP 02023252 | A | 25-01-1990 | JP | 2611350 B2 | 21-05-1997 |

EPO FORM P0459

For more details about this annex : see Official Journal of the European Patent Office, No. 12/82

**REFERENCES CITED IN THE DESCRIPTION**

**Patent documents cited in the description**

- EP 1712768 A2

- WO 2007006660 A1